# EUROPÄISCHE PATENTSCHRIFT

(11) **EP 2 549 375 B1**
(45) Veröffentlichungstag und Bekanntmachung des Hinweises auf die Patenterteilung: **28.03.2018**
(21) Anmeldenummer: 12176878.2
(22) Anmeldetag: 18.07.2012
(51) Int. Cl.: G06F 3/12

(54) **Verfahren zum Herstellen wenigstens eines Druckfarbträgers und Verfahren zum Herstellen eines oder mehrerer Druckprodukte**
Method for producing at least one printing ink carrier and method for producing one or more printed products
Procédé de fabrication d'au moins un support de couleur d'impression et procédé de fabrication d'un ou plusieurs produits d'impression

(30) Priorität: 19.07.2011 DE 102011107916
(43) Veröffentlichungstag der Anmeldung: 23.01.2013
(73) Patentinhaber: CEWE Stiftung & Co. KGaA, 26133 Oldenburg (DE)
(72) Erfinder: Meißner, Stefan, Dipl.-Ing., 01099 Dresden (DE)
(74) Vertreter: Eisenführ Speiser

(56) Entgegenhaltungen:
- EP-A2- 1 855 189
- US-A1- 2005 264 832
- US-A1- 2007 013 940
- US-A1- 2009 033 978

## Beschreibung

Die Erfindung betrifft ein Verfahren zum Herstellen wenigstens eines Druckfarbträgers mit den Merkmalen gemäß dem Oberbegriff des Anspruchs 1. Des Weiteren betrifft die Erfindung ein Verfahren zum Herstellen eines oder mehrerer Druckprodukte gemäß dem Oberbegriff des Anspruchs 9.

EP 1 855 189 A2 offenbart ein Drucksystem mit einem Prozessmanagementabschnitt, einem Digitaldruckabschnitt und einem Nachdruckabschnitt. Der Prozessmanagementabschnitt kombiniert mehrere Druckaufträge mehrerer Kunden zu einem Kombinationsdruckauftrag, der von dem Digitaldruckabschnitt ausgeführt wird. Die resultierenden Druckerzeugnisse werden dann in dem Nachdruckabschnitt in kleinere Elemente, das heißt in einzelne Karten, zerschnitten. Nachdem auf diese Art die Karten hergestellt worden sind, wird dies dem Prozessmanagementabschnitt mittels eines Signals mitgeteilt, woraufhin die Fertigstellung der Karten den Kunden angezeigt wird.

US 2005/264832 A1 offenbart ein Drucksystem, bei welchem mehrere Druckaufträge zu einem größeren, gemeinsamen Druckauftrag zusammengestellt werden, wobei die Auslösung der Zusammenstellung bei Vorhandensein von verfügbarem Speicherplatz in der druckerinternen Warteschlange erfolgt. Bei der Herstellung von Druckprodukten werden Informationen in Form von Texten oder Bildern auf ein Substrat, auch als Bedruckstoff bezeichnet, in einer Druckvorrichtung, beispielsweise einer Druckmaschine, aufgebracht oder von einem temporären Träger übertragen. Die Übertragung der Druckfarbe erfolgt dabei in einer Gruppe von Druckverfahren mittels einer Druckform oder einem Ladungsträger oder in einer anderen Gruppe von Druckverfahren direkt auf einen Druckfarbträger, der einen Teil des Substrates bildet. Beispielsweise gelangen im verbreitet verwendeten Offsetdruck beschichtete Aluminium-Druckplatten als Druckfarbträger zum Einsatz, welche in farbführende und nicht-farbführende Bereiche strukturierbar sind.

Besonders im Zusammenhang von Drucksachen in einem Format, das relativ zum Druckformat der Druckvorrichtung klein ist, können die auf ein Substrat zu übertragenden Informationen ein aus verschiedenen Bestandteilen zusammengestelltes, insbesondere aus einer Kombination einer Mehrzahl von verschiedenen Druckaufträgen bestehendes Drucklayout sein. Die Bestandteile werden nach erfolgtem Druck in Weiterverarbeitungsschritten getrennt, gegebenenfalls gefalzt und zu separaten fertigen Druckprodukten verarbeitet. Beispielsweise können einzelne Seiten eines Heftes, mehrere Visitenkarten und/oder verschiedene Seiten einer Faltschachtel in einem Drucklayout zusammengefasst sein. Welche Information in einem Druckprodukt zusammengeführt wird, hängt in der Regel von den technischen und organisatorischen Rahmenbedingungen des gesamten Druckprozesses ab: Die Anordnung der Information muss unter anderem geometrische Randbedingungen der Druckvorrichtung und Vorgaben der drucktechnischen Weiterverarbeitung berücksichtigen. Ein typisches Kriterium der Auswahl einer Anzahl von Druckaufträgen aus einer Sammlung für die Zusammenstellung in einem Drucklayout ist die Ähnlichkeit oder Identität des Bedruckstoffs und/oder die Ähnlichkeit oder Identität des Formats und/oder die ähnliche oder identische Auflagenhöhe.

Aus Sicht der organisatorischen Prozessoptimierung kann es sinnvoll sein, die Information eines bestimmten Druckauftrags mehrfach in einem Drucklayout anzuordnen (mehrfacher Nutzen). Auch werden aus Gründen der Prozessoptimierung häufig verschiedene Druckaufträge in einem Drucklayout gemischt. Insbesondere im Zusammenhang von Druckverfahren mit Druckformen werden Druckbogen, konkret auch die Druckformen der einzelnen Farbauszüge selbst, mit gemischt zusammengestellten Drucklayouts auch Sammelformen genannt.

Sammelformen und/oder Druckformen mit mehrfachem Nutzen werden vor allem in Druckbetrieben mit einem hohen Auftragsvolumen eingesetzt. Dabei entstehen besondere zusätzliche Optimierungsanforderungen, wenn die verschiedenen Druckaufträge nicht nur von einer Fertigungsstraße, gegebenenfalls mit unterschiedlichen Druckformaten verarbeitet werden, sondern auf unterschiedliche Druckvorrichtungen und Weiterverarbeitungssysteme verteilt werden.

Ein Programm zur automatischen Berechnung eines Layouts ist beispielsweise in der Software Metrix® von LithoTechnics, Inc. aus Edmonds, Washington, USA, realisiert. Die Auslösung der Zusammenstellung eines Layouts durch das Programm erfolgt durch einen Bediener, einen Auftragsplaner oder einen Montierer, also in einem nicht integrierten Arbeitsablauf.

Vor diesem Hintergrund ist es Aufgabe der vorliegenden Erfindung, ein effizientes Verfahren zum Herstellen eines Druckfarbträgers zu schaffen.

Diese Aufgabe wird erfindungsgemäß durch ein Verfahren zum Herstellen wenigstens eines Druckfarbträgers mit den Merkmalen gemäß Anspruch 1 gelöst. Vorteilhafte Weiterbildungen der Erfindung sind in den abhängigen Ansprüchen charakterisiert.

Im erfindungsgemäßen Verfahren zum Herstellen wenigstens eines Druckfarbträgers, der wenigstens zeitweise und/oder teilweise in einer Druckvorrichtung aufnehmbar ist, wird ein Drucklayout, das aus einer Mehrzahl von einzelnen Druckaufträgen besteht, bereitgestellt. Der wenigstens eine Druckfarbträger wird in farbtragende und nicht-farbtragende Bereiche gemäß wenigstens einem Farbauszug des Drucklayouts strukturiert. Erfindungsgemäß wird ein Signal, das zum Auslösen des Zusammenstellens des aus einer Mehrzahl von einzelnen Druckaufträgen bestehenden Drucklayouts aus einer Sammlung von Druckaufträgen benutzt wird, aus einem der Druckvorrichtung zugeordneten Rechner (dabei stehend und/oder integriert in, zugehörig zur Druckmaschine) gesendet, nachdem ein Maß für die verbleibende Zeit bis zur Bereitschaft der Druckvorrichtung, einen nachfolgenden Druckauftrag abzuarbeiten, einen Grenzwert unterschreitet, wobei das Signal des der Druckvorrichtung zugeordneten Rechners auf Basis des Job Messaging Format (JMF) Status-Signals der Druckvorrichtung oder ausgelöst durch das JMF-Status-Signal der Druckvorrichtung generiert wird.

Auf die erfindungsgemäße Weise wird ein Drucklayout, insbesondere eine Sammelform anhand der aktuellen Produktionsbedingungen, insbesondere der bestehenden Sammlung von Druckaufträgen, und dem Betriebszustand, insbesondere der Restlaufzeit für den Druckauftrag oder für die Warteschlange mehrerer Druckaufträge, der Druckvorrichtung zusammengestellt, so dass der Inhalt des Drucklayouts möglichst optimiert geometrisch und/oder mit möglichst kompatiblen Auflagemengen aus einzelnen Aufträgen ausgewählt ist.

Darüber hinaus können für das Zusammenstellen des Drucklayout, insbesondere der Sammelform, die Parameter des in der Warteschlange unmittelbar vorgeordneten Drucklayouts analysiert und/oder berücksichtigt werden: Besonders bedeutsam ist der Bedruckstoff; es spart Zeit und Makulatur, wenn dem nachfolgende Drucklayout derselbe Bedruckstoff, zum Beispiel dasselbe Papier, zugeordnet ist. Des Weiteren können auch bevorzugt diejenigen Druckaufträge für das nachfolgende Drucklayout ausgewählt werden, welche ein identisches oder ähnliches Farbprofil (beziehungsweise Farbannahme) aufweisen, so dass die Druckvorrichtung schnell in Farbe kommt.

Ein Drucklayout wird umso effizienter, je mehr unterschiedliche Druckaufträge mit gleicher oder ähnlicher Auflage und/oder Farbigkeit darauf platziert werden können. Erfin dungsgemäß wurde festgestellt, dass die Wahrscheinlichkeit ein optimales Drucklayout zusammenzustellen höher ist, wenn die Sammlung von Druckaufträgen möglichst groß ist. Erst die erfindungsgemäße Vorgehensweise erschließt eine möglichst große Sammlung von Druckaufträgen.

In vorteilhafter Weise kann erfindungsgemäß die Zusammenstellung des Drucklayouts aus einer Sammlung von Druckaufträgen automatisiert und/oder dynamisiert werden ("just-in-time"), indem jene bis zu einem Zeitpunkt verzögert ist, in welchem signalisiert wird, dass die Druckvorrichtung zeitnah einen weiteren Auftrag mit einem neu zusammengestellten Drucklayout abarbeiten kann. Ein möglichst später Zeitpunkt ist insbesondere insoweit vorteilhaft, als auf eine möglichst aktuelle und a priori umfangreiche Sammlung von Druckaufträgen zurückgegriffen werden kann, so dass eine optimale und/oder effiziente Auswahl möglichst kompatibler Druckaufträge, zum Beispiel mit ähnlicher Auflage oder komplementärer Geometrie, erfolgen kann. In der Folge ist es auch möglich, die Produktionskapazität zu steigern und/oder den Materialverbrauch zu senken. Eine zentrale Druck-Plantafel wird durch eine Warteschlange von abzuarbeitenden Druckaufträgen ersetzt. Damit werden in vorteilhafter Weise die Vorzüge einer elektronisch vernetzten Druckerei, insbesondere auf Basis der Job Definition Format (JDF) Spezifikation und/oder der Job Messaging Format (JMF) Technologie genutzt.

In einer ersten Gruppe von Ausführungsformen des erfindungsgemäßen Verfahrens zum Herstellen wenigstens eines Druckfarbträgers wird zum Strukturieren ein Druckformrohling bereitgestellt, dessen Oberfläche in einem Bearbeitungsgerät zu einer Druckform als Druckfarbträger strukturiert wird, oder es wird ein Ladungsträger bereitgestellt, auf dessen Oberfläche ein latentes elektrostatisches Bild durch partielle Aufladung erzeugbar ist, so dass aufgrund unterschiedlicher Ladungszustände der Oberfläche farbtragende und nicht-farbtragende Bereiche entstehen. Mit anderen Worten, der Druckfarbträger kann eine Druckform für ein Druckverfahren mit Master (zum Beispiel Offsetdruck, Flexodruck oder Tiefdruck) oder ein Ladungsträger (zum Beispiel Xerographie) sein.

In einer zweiten Gruppe von Ausführungsformen des erfindungsgemäßen Verfahrens wird ein Substrat bereitgestellt, dessen Oberfläche wenigstens teilweise als Druckfarbträger dient und in farbtragende und nicht-farbtragende Bereiche strukturiert wird, indem Druckfarbe auf den farbtragenden Bereichen aufgebracht wird. Anders gesagt, das erfindungsgemäße Verfahren kann auch im Zusammenhang von direkt strukturierenden Druckverfahren, wie beispielsweise einem Tintenstrahldruckverfahren (Inkjet-Verfahren), zum Einsatz gelangen.

In vorteilhaften Umsetzungen des Verfahrens zum Herstellen wenigstens eines Druckfarbträgers wird darüber hinaus das Drucklayout in einem Rechner, insbesondere einem Prepress-Rechner (ein Rechner zur Durchführung von Prepressoperationen), zusammengestellt, der in einem Speicher eine Sammlung von Druckaufträgen aufweist oder der von einem entfernten Rechner Daten für einen oder mehrere Druckaufträge empfängt. Auf dem Rechner, insbesondere dem Prepress-Rechner, kann dazu ein entsprechendes Computerprogramm mit einem Algorithmus zur Auswahl einer Anzahl von Druckaufträgen aus der Sammlung und zur Zusammenstellung in einem Layout vorhanden sein und/oder eingesetzt werden. Anders gesagt, der Rechner verfügt über ein Regelwerk, insbesondere mit mathematischen Optimierungsalgorithmen, welches das Layout berechnen kann.

Das Signal wird vom der Druckvorrichtung zugeordneten Rechner gesendet, nachdem ein Maß für die verbleibende Zeit bis zur Bereitschaft der Druckvorrichtung, einen nachfolgenden Druckauftrag abzuarbeiten, einen Grenzwert unterschreitet. Mit anderen Worten, ein Maß für den Betriebszustand der Druckvorrichtung beziehungsweise ein Maß für die bevorstehende Änderung eines Betriebszustands der Druckvorrichtung bewirkt das Senden eines Signals vom der Druckvorrichtung zugeordneten Rechner.

In Weiterentwicklungen des erfindungsgemäßen Verfahrens werden Daten für einen oder mehrere Druckaufträge von einem Eingangs-Rechner in die Sammlung von Druckaufträgen eingefügt. Insbesondere können von einem über das Internet verbundenen entfernten Rechner stammende Daten für einen oder mehrere Druckaufträge vom Eingangs-Rechner empfangen werden. Auf diese Weise werden eingehende Druckaufträge für die Druckerei in druckfertige Einzelbogen oder Falzbogen zerlegt, priorisiert und zentral gespeichert.

Konkret wird im erfindungsgemäßen Verfahren das Signal des der Druckvorrichtung zugeordneten Rechners auf Basis des JMF-Status-Signals der Druckvorrichtung oder ausgelöst durch das JMF Status-Signal der Druckvorrichtung generiert werden. Eine derartige Realisierung ist vorteilhaft kompatibel mit einer Druckereisteuerung, in welcher ein zentrales Workflow-Manager-Programm den Produktionsablauf auf miteinander vernetzten Druckvorrichtungen und Druckweiterverarbeitungseinrichtungen steuert, wobei verbreitete Job Definition Format (JDF) beziehungsweise JMF Technologie zum Einsatz gelangt, welche zur Übermittlung von Auftragsdaten, Auftragsmetadaten und Produktionsparametern sowie zur Überwachung auf XML und MIME Pakete zurückgreift. Dieser Standard ist von der CIP-Organisation definiert (siehe auch die Webseite der Organisation unter www.cip4.org).

Des Weiteren oder alternativ dazu können am Verfahren beteiligte Rechner wenigstens zeitweise Daten und/oder Steuerungsinformationen im JDF Format und/oder PDF Format senden und/oder empfangen.

Die Erfindung nutzt also in bevorzugter Ausführungsform insbesondere den in zunehmendem Maße zum Einsatz gelangenden JDF-basierten JMF Datenfluss, insbesondere ein JMF Status-Signal der zu benutzenden Druckvorrichtung, wobei verbreitet die Druckereisteuerung mittels einer Management Information Systems (MIS) überwacht wird. Das Job Definition Format ist in einer umfangreichen Spezifikation festgelegt, welche von den Webseiten der CIP4-Organisation herunterladbar ist.

Im Zusammenhang des erfinderischen Gedankens steht auch ein Verfahren zum Herstellen eines oder mehrerer Druckprodukte. In einem derartigen Verfahren wird erfindungsgemäß wenigstens ein Druckbild auf wenigstens einem Substrat erzeugt, indem ein Farbauszug oder mehrere übereinanderliegende Farbauszüge auf dem Substrat aufgebracht werden. Dabei wird entweder wenigstens ein mittels eines Verfahrens mit Merkmalen oder Merkmalskombinationen gemäß dieser Darstellung hergestellter und mit Druckfarbe versehener Druckfarbträger abgedruckt oder der mittels eines Verfahrens mit Merkmalen oder Merkmalskombinationen gemäß dieser Darstellung in farbführende und nicht-farbführende Bereiche strukturierte Druckfarbträger bildet wenigstens einen Teil des Substrates.

Die in dieser Darstellung beschriebenen Merkmale können einzeln, sämtlich gemeinsam oder in Kombinationen einzelner Merkmale im erfindungsgemäßen Verfahren zum Herstellen wenigstens eines Druckfarbträgers realisiert sein.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: eine schematische Darstellung einer vorteilhaften Ausführungsform eines Arbeitsablaufs zur Aufnahme von Druckaufträgen in eine Sammlung von Druckaufträgen, und
- Figur 2: eine schematische Darstellung einer vorteilhaften Ausführungsform eines Arbeitsablaufs zum Erstellen eines Drucklayouts, zur Herstellung eines Druckfarbträgers und zum Abdrucken des Druckfarbträgers.

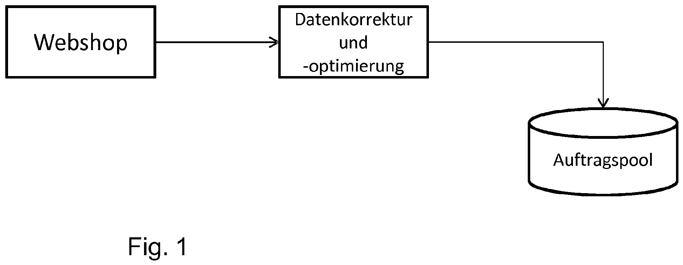

Die Figur 1 zeigt schematisch eine vorteilhafte Ausführungsform eines Arbeitsablaufs zur Aufnahme von Druckaufträgen in eine Sammlung von Druckaufträgen. Bei einer Druckerei können Kunden über ein Internetportal in Form eines Webshops Druckaufträge platzieren und Druckdaten übertragen. Nach Dateneingang werden diese unverzüglich in einem Druckvorstufen-Server automatisch auf Viren und ähnliche Schadprogramme geprüft und laufen durch ein automatisches Preflightsystem, damit festgestellt werden kann, ob der eingegebene Druckauftrag fehlerhafte und/oder nicht ausführbare Anteile aufweist. Gegebenenfalls werden die eingegangenen Daten in Falzbogen zerlegt. Falls der Druckauftrag ausführbar ist, schließt sich eine Optimierung der Daten an, durch welche behebbare Fehler korrigiert werden (Datenkorrektur und -optimierung). Nach interner Druckfreigabe werden die Druckaufträge schließlich in der Sammlung, dem Auftragspool, auch als Speicher zu bezeichnen, bereitgestellt. Auf diese Weise des unverzüglichen Aufnehmens in den Speicher wird die Anzahl der Aufträge in der Sammlung möglichst maximal groß gehalten.

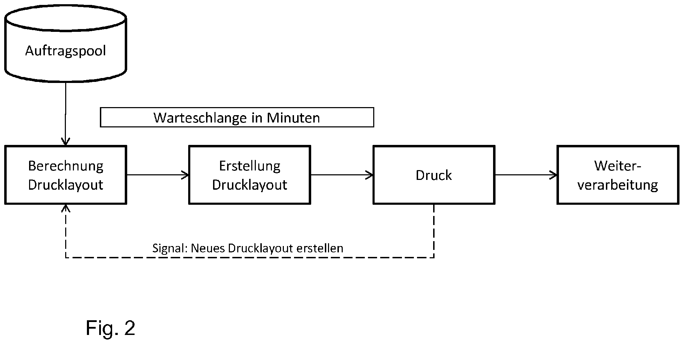

Die Figur 2 ist eine schematische Darstellung einer vorteilhaften Ausführungsform eines Arbeitsablaufs zum Erstellen eines Drucklayouts, zur Herstellung eines Druckfarbträgers und zum Abdrucken des Druckfarbträgers unter Nutzung eines JDF-Workflows. In dieser konkreten Situation wird eine Sammeldruckform für ein Offsetdruckverfahren hergestellt und abgedruckt.

Mittels eines Computerprogramms, welches einen Algorithmus zur Auswahl und Anordnung der ausgewählten Druckaufträge aus der Sammlung von Druckaufträgen umfasst, wird ein Drucklayout zusammengestellt, konkret berechnet. Dieses wird in Form eines Druckbogens im Portable Document Format (PDF) und/oder JDF-Layout zu einem Druckformbelichter übertragen, in welchem Sammeldruckformen der einzelnen Farbauszüge durch Belichtung strukturiert werden (Erstellung des Drucklayouts). Nach der Erstellung der Druckplatten werden diese wie gewohnt zur Druckmaschine gebracht und in dieser abgedruckt (Druck). Die Sammeldruckformen stellen JDF-ExposedMedia dar. Die abgedruckten Druckbogen werden dann bearbeitet, zum Beispiel beschnitten, gestanzt oder gefalzt (Weiterverarbeitung). Dabei werden die einzelnen Aufträge insbesondere voneinander getrennt.

In innovativer Weise erfolgt die Erstellung des Drucklayout automatisch nach erfindungsgemäßer Anforderung durch die Druckvorrichtung, hier Druckmaschine, bevorzugt Offsetdruckmaschine, mittels eines Signals "Neues Drucklayout", wenn die Warteschlange der abzuarbeitenden Druckaufträge einen definierten Wert in einer Zeiteinheit, hier beispielhaft in Minuten, unterschritten hat, möglichst kurzfristig erst wenn ein neues Drucklayout benötigt wird. Technisch gesehen wird das Signal "Neues Drucklayout" durch das JMF Status-Signal der Druckmaschine erzeugt. Mittels JMF können periodische Status-Signale von der Druckmaschine für eine http-Adresse angefordert werden. Alternativ zum Status-Signal kann auch das entsprechende native, herstellerabhängige Signal der Maschine genutzt werden. Das JMF Status Signal ist daher insoweit vorteilhaft, als über das gleiche System Maschinen unterschiedlicher Hersteller integriert werden können.

Ein Druckerei-Manager-Applikationsprogramm an dieser http-Adresse nimmt das Signal entgegen und überprüft die aktuelle Länge der Warteschlange der entsprechenden Maschine. Im Manager-Programm können auch Einstellungen vorgenommen werden, wie lange eine Warteschlange für eine bestimmte Maschine mindestens sein muss und (des Weiteren optional) ob die Maschine in naher Zukunft abgeschaltet werden soll, so dass die Warteschlange vollständig abzuarbeiten ist. Das Manager-Programm löst auch die Erstellung eines neuen Drucklayouts und/oder die Herstellung eines neuen Druckfarbträgers aus, wenn die Rahmenbedingungen dies erfordern.

Erfindungsgemäß wird folglich ein effizientes Verfahren geschaffen, in welchem Drucklayouts auf Basis einer großen Sammlung von einzelnen Druckaufträgen möglichst zeitnah für den Druck zusammengestellt werden.

## Patentansprüche

1. Verfahren zum Herstellen wenigstens eines Druckfarbträgers, der wenigstens zeitweise und/oder teilweise in einer Druckvorrichtung aufnehmbar ist, in welchem ein Drucklayout, das aus einer Mehrzahl von einzelnen Druckaufträgen besteht, bereitgestellt wird, wobei der wenigstens eine Druckfarbträger in farbtragende und nicht-farbtragende Bereiche gemäß wenigstens eines Farbauszugs des Drucklayouts strukturiert wird,
**dadurch gekennzeichnet,**
**dass** ein Signal, das zum Auslösen des Zusammenstellens des aus einer Mehrzahl von einzelnen Druckaufträgen bestehenden Drucklayouts aus einer Sammlung von Druckaufträgen benutzt wird, aus einem der Druckvorrichtung zugeordneten Rechner gesendet wird, wenn die Restlaufzeit der in einer Warteschlange der Druckvorrichtung gespeicherten abzuarbeitenden Aufträge einen definierten Wert unterschritten hat.

2. Verfahren zum Herstellen wenigstens eines Druckfarbträgers gemäß Anspruch 1, wobei zum Strukturieren ein Druckformrohling bereitgestellt wird, dessen Oberfläche in einem Bearbeitungsgerät zu einer Druckform als Druckfarbträger strukturiert wird oder dass ein Ladungsträger bereitgestellt wird, auf dessen Oberfläche ein latentes elektrostatisches Bild durch partielle Aufladung erzeugbar ist, so dass aufgrund unterschiedlicher Ladungszustände der Oberfläche farbtragende und nicht-farbtragende Bereiche entstehen.

3. Verfahren zum Herstellen wenigstens eines Druckfarbträgers gemäß Anspruch 1, wobei ein Substrat bereitgestellt wird, dessen Oberfläche wenigstens teilweise als Druckfarbträger dient und in farbtragende und nicht-farbtragende Bereiche strukturiert wird, indem Druckfarbe auf den farbtragenden Bereichen aufgebracht wird.

4. Verfahren zum Herstellen wenigstens eines Druckfarbträgers gemäß einem der vorstehenden Ansprüche,
wobei das Drucklayout in einem Rechner zusammengestellt wird, der in einem Speicher eine Sammlung von Druckaufträgen aufweist oder der von einem entfernten Rechner Daten für einen oder mehrere Druckaufträge empfängt.

5. Verfahren zum Herstellen wenigstens eines Druckfarbträgers gemäß einem der vorstehenden Ansprüche,
wobei Daten für einen oder mehrere Druckaufträge von einem Eingangs-Rechner in die Sammlung von Druckaufträgen eingefügt werden.

6. Verfahren zum Herstellen wenigstens eines Druckfarbträgers gemäß Anspruch 5, wobei von einem über das Internet verbundenen entfernten Rechner stammende Daten für einen oder mehrere Druckaufträge vom Eingangs-Rechner empfangen werden.

7. Verfahren zum Herstellen wenigstens eines Druckfarbträgers gemäß einem der vorstehenden Ansprüche,
wobei das Signal des der Druckvorrichtung zugeordneten Rechners auf Basis des JMF-Status-Signals der Druckvorrichtung oder ausgelöst durch das JMF-Status-Signal der Druckvorrichtung generiert wird.

8. Verfahren zum Herstellen wenigstens eines Druckfarbträgers gemäß einem der vorstehenden Ansprüche,
wobei am Verfahren beteiligte Rechner wenigstens zeitweise Daten und/oder Steuerungsinformationen im JDF-Format und/oder PDF-Format senden und/oder empfangen.

9. Verfahren zum Herstellen eines oder mehrerer Druckprodukte, wobei wenigstens ein Druckbild auf wenigstens einem Substrat erzeugt wird, indem ein Farbauszug oder mehrere übereinanderliegende Farbauszüge auf dem Substrat aufgebracht werden,
**dadurch gekennzeichnet,**
**dass** wenigstens ein mittels eines Verfahrens gemäß einem der vorstehenden Ansprüche 2 oder 4 bis 8, rückbezogen auf Anspruch 2, hergesteller und mit Druckfarbe versehener Druckfarbträger abgedruckt wird oder dass der mittels eines Verfahrens gemäß einem der vorstehenden Ansprüche 3 oder 4 bis 8, rückbezogen auf Anspruch 3, in farbführende und nicht-farbführende Bereiche strukturierter Druckfarbträger wenigstens einen Teil des Substrates bildet.

## Claims

1. Method for producing at least one printing ink carrier which can be accommodated at least at times and/or in part in a printing device in which a print layout consisting of a plurality of individual print jobs is provided, wherein the at least one printing ink carrier is structured into ink-carrying and non-ink-carrying regions according to at least one colour separation of the print layout, **characterized in that** a signal which is used to trigger the compiling of the print layout from a collection of print jobs, said print layout consisting of a plurality of individual print jobs, is transmitted from a computer assigned to the printing device when the remaining runtime of the jobs to be processed which are stored in a queue of the printing device has fallen below a defined value.

2. Method for producing at least one printing ink carrier according to claim 1, wherein, for the structuring, a printing form blank is provided, the surface of which is structured in a machining device to form a printing form as the printing ink carrier, or a charge carrier is provided, on the surface of which a latent electrostatic image can be generated by partial charging so that ink-carrying and non-ink-carrying regions are obtained as a result of different charge states of the surface.

3. Method for producing at least one printing ink carrier according to claim 1, wherein a substrate is provided, the surface of which serves at least in part as a printing ink carrier and is structured into ink-carrying and non-ink-carrying regions by applying printing ink to the ink-carrying regions.

4. Method for producing at least one printing ink carrier according to one of the preceding claims, wherein the print layout is compiled in a computer which has a collection of print jobs in a memory or which receives data for one or more print jobs from a remote computer.

5. Method for producing at least one printing ink carrier according to one of the preceding claims, wherein data for one or more print jobs are inserted from an input computer into the collection of print jobs.

6. Method for producing at least one printing ink carrier according to claim 5, wherein data which originate from a remote computer connected via the Internet and which relate to one or more print jobs are received from the input computer.

7. Method for producing at least one printing ink carrier according to one of the preceding claims, wherein the signal from the computer assigned to the printing device is generated on the basis of the JMF status signal of the printing device or in a manner triggered by the JMF status signal of the printing device.

8. Method for producing at least one printing ink carrier according to one of the preceding claims, wherein, at least at times, computers involved in the method transmit and/or receive data and/or control information in JDF format and/or PDF format.

9. Method for producing one or more printed products, wherein at least one printed image is generated on at least one substrate by applying a colour separation or a plurality of superimposed colour separations to the substrate, **characterized in that** at least one printing ink carrier which is produced by means of a method according to one of the preceding claims 2 or 4 to 8, referring back to claim 2, and which is provided with printing ink is printed, or **in that** the printing ink carrier which is structured into ink-carrying and non-ink-carrying regions by means of a method according to one of the preceding claims 3 or 4 to 8, referring back to claim 3, forms at least a part of the substrate.

## Revendications

1. Procédé de fabrication d'au moins un support de couleur d'impression, qui peut être disposé au moins par moments et/ou en partie dans un dispositif d'impression à l'intérieur duquel une maquette d'impression, qui se compose d'une pluralité de tâches d'impression individuelles, est mise à disposition, dans lequel l'au moins un support de couleur d'impression est structuré selon des zones porteuses de couleurs et non porteuses de couleurs selon au moins une couleur primaire de la maquette d'impression,
**caractérisé en ce**
**qu'**un signal, qui est utilisé pour le déclenchement de l'assemblage de la maquette d'impression se composant d'une pluralité de tâches d'impression individuelles à partir d'un ensemble d'accumulation de tâches d'impression, est émis depuis un ordinateur associé au dispositif d'impression lorsque la durée d'exécution restante des tâches à traiter stockées dans une file d'attente du dispositif d'impression est restée inférieure à une valeur définie.

2. Procédé de fabrication d'au moins un support de couleur d'impression selon la revendication 1, dans lequel pour la structuration est mise à disposition une planche vierge dont la surface est structurée dans un appareil de traitement en une planche en tant que support de couleur d'impression ou est mis à disposition un support de charge sur la surface duquel une image électrostatique latente peut être générée par une décharge partielle de sorte que des zones porteuses de couleurs et non porteuses de couleurs sont créées en raison d'états de charge différents de la surface.

3. Procédé de fabrication d'au moins un support de couleur d'impression selon la revendication 1, dans lequel est mis à disposition un substrat dont la surface sert au moins en partie de support de couleur d'impression et est structurée en des zones porteuses de couleurs et non porteuses de couleurs par le fait qu'une couleur d'impression est appliquée sur les zones porteuses de couleurs.

4. Procédé de fabrication d'au moins un support de couleur d'impression selon l'une quelconque des revendications précédentes,
dans lequel la maquette d'impression est assemblée dans un ordinateur qui comporte dans une mémoire un ensemble d'accumulation de tâches d'impression ou qui reçoit d'un ordinateur distant des données pour une ou plusieurs tâches d'impression.

5. Procédé de fabrication d'au moins un support de couleur d'impression selon l'une quelconque des revendications précédentes,
dans lequel des données pour une ou plusieurs tâches d'impression sont introduites par un ordinateur d'entrée dans l'ensemble d'accumulation de tâches d'impression.

6. Procédé de fabrication d'au moins un support de couleur d'impression selon la revendication 5, dans lequel des données provenant d'un ordinateur distant relié par le biais de l'Internet sont reçues pour une ou plusieurs tâches d'impression par l'ordinateur d'entrée.

7. Procédé de fabrication d'au moins un support de couleur d'impression selon l'une quelconque des revendications précédentes,
dans lequel le signal de l'ordinateur associé au dispositif d'impression est généré sur la base du signal d'état JMF du dispositif d'impression ou d'une manière déclenchée par le signal d'état JMF du dispositif d'impression.

8. Procédé de fabrication d'au moins un support de couleur d'impression selon l'une quelconque des revendications précédentes,
dans lequel des ordinateurs participant au procédé envoient et/ou reçoivent au moins par moments des données et/ou des informations de commande dans le format JDF et/ou dans le format PDF.

9. Procédé de fabrication d'un ou de plusieurs produits d'impression, dans lequel au moins une image d'impression est générée sur au moins un substrat par le fait qu'une couleur primaire ou plusieurs couleurs primaires superposées sont appliquées sur le substrat, **caractérisé en ce**
**qu'**au moins un support de couleur d'impression, fabriqué au moyen d'un procédé selon l'une des revendications précédentes 2 ou 4 à 8, en référence à la revendication 2, et pourvu d'une couleur d'impression est imprimé ou que le support de couleur d'impression structuré en des zones d'adduction de couleur et de non-adduction de couleur au moyen d'un procédé selon l'une des revendications précédentes 3 ou 4 à 8, en référence à la revendication 3, forme au moins une partie du substrat.
